# EUROPEAN PATENT SPECIFICATION

(11) **EP 1 630 431 B1**
(45) Date of publication and mention of the grant of the patent: **11.11.2009**
(21) Application number: 03816610.4
(22) Date of filing: 05.09.2003
(51) Int. Cl.: F16C 11/06

(54) **BALL JOINT**
KUGELGELENK
JOINT A ROTULE

(30) Priority: 07.04.2003 JP 2003102975
(43) Date of publication of application: 01.03.2006
(73) Proprietor: KABUSHIKI KAISHA SOMIC ISHIKAWA, Sumida-ku, Tokyo 130-0004 (JP)
(72) Inventor: SUZUKI, Keiichiro, C/O K. K. KAISHA SOMIC ISHIKAWA, Hamamatsu-shi, Shizuoka 435-8560 (JP); ODA, Takahiro, C/O KABUSHIKI KAISHA SOMIC ISHIKAWA, Hamamatsu-shi, Shizuoka 435-8560 (JP); TSUKADA, Naoko, C/O KABUSHIKI K. SOMIC ISHIKAWA, Hamamatsu-shi, Shizuoka 435-8560 (JP)
(74) Representative: Kemp, Paul Geoffrey
(86) International application number: PCT/JP2003/011355
(87) International publication number: WO 2004/090354

(56) References cited:
- JP-A- 10 205 524
- JP-U- 5 045 340

## Description

### Technical Field

The present invention relates to a ball joint having a housing provided with a dust cover.

### Background Art

For example, ball joints used in suspension devices (suspension mechanisms) or steering gears (steering mechanisms) of automobiles are known.

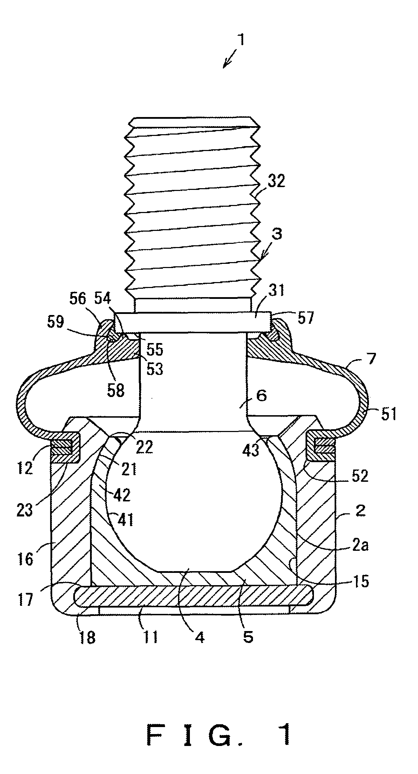

As a ball joint of this type, a ball joint as described in, for example, Japanese Laid-open Utility Model Publication No. 1-139119 (Page 5-Page 8, Fig. 1-Fig. 3) is known. This ball joint comprises a ball stud having a ball portion as a ball head portion and a stud portion as a to-be-fixed portion provided in a protruding manner from this ball portion. The ball portion of this ball stud is rotatably housed in an approximately cylindrical housing. In addition, the stud portion of the ball stud is protruded outside through an opening portion on one axial end side of the housing. Furthermore, on the outer circumferential surface of this stud portion, an approximately ring-formed brim portion is integrally provided. Moreover, between the opening portion of the housing and outer circumferential surface of the stud portion, a pipe-formed dust cover formed of an elastic member or the like is attached. At an opening of a stud portion-side end portion of this dust cover, a lip portion that comes into contact with a part of the outer circumferential surface of the brim portion of the ball stud is provided in a protruding manner. This lip portion is provided along the outer circumferential surface of the brim portion, retains the outer circumferential surface of this brim portion like a surface, and thereby prevents external water or dust, etc., from entering the inside of the dust cover.

However, in the above-described ball joint, when the ball stud is relatively greatly swayed with respect to the housing, since the lip portion of the dust cover is no longer closely fitted to the outer circumferential surface of the brim portion of the ball stud and a gap is created between the lip portion and outer circumferential surface of the brim portion, sealing is not satisfactory, wherein exists a problem.

The present invention has been made in view of such a problem, and an object thereof is to provide a ball joint whose sealing is satisfactory.

### Disclosure of the Invention

A ball joint of the present invention comprises: a housing with an opening portion; a ball head portion rotatably housed in this housing; a ball stud with a stud portion provided in a protruding manner from this ball head portion, protruding from said opening portion and a brim portion provided in a protruding manner on an outside surface of this stud portion; and an elastic approximately pipe-formed dust cover inserted through said stud portion, provided across an outside surface of said housing and an outside surface of said stud portion so as to block said opening portion, wherein said dust cover is provided with a first lip portion which is closely fitted in a manner urged toward a ball head portion-side end face of said brim portion and second lip portion which is closely fitted in a manner urged toward an outside surface of said brim portion and wherein the dust cover is provided with a pocket portion provided between the first lip portion and second lip portion adjacent the brim portion of the ball stud, whereby the pocket potion can retain a lubricant therein. And, by providing an elastic cover, between the outside surface of the housing and outside surface of the stud portion provided in a protruding manner from the ball head portion, protruding from the opening portion of the housing, so as to block the opening portion of the housing, and by providing this dust cover with a first lip portion which is closely fitted in a manner urged toward a ball head portion-side end face of the brim portion provided in a protruding manner on the ball stud and a second lip portion which is closely fitted in a manner urged toward an outside surface of the brim portion, for example, in a case where the ball stud is relatively greatly swayed with respect to the housing, the first lip portion and second lip portion securely follow the brim portion of the ball stud and are closely fitted, therefore, sealing can be made satisfactory.

And, by providing a pocket portion between the first lip portion and second lip portion of the dust cover and brim portion of the ball stud, retaining a lubricant member inside, wear resistance of the second lip portion can be improved, and a co-rotation of the ball stud and dust cover can be prevented to secure sealing.

The first lip portion may be, in a manner urged toward a ball head portion-side end face of the brim portion, closely fitted like a surface to a part of this end face. And, by close-fitting of the first lip portion, in a manner urged toward a ball head portion-side end face of the brim portion, like a surface to a part of the end face, an urging force applied from the first lip portion to the ball head portion-side end face of the brim portion is more securely transmitted to the ball head portion-side end face of the brim portion, therefore, sealing can be improved.

The second lip portion may be, in a manner urged toward an outside surface of the brim portion, closely fitted like a surface to a part of this outside surface. And, by close-fitting of the second lip portion, in a manner urged toward an outside surface of the brim portion, like a surface to a part of the outside surface, an urging force applied from the second lip portion to the outside surface of the brim portion is more securely transmitted to the outside surface of the brim portion, therefore, sealing can be improved.

### Brief Description of the Drawings

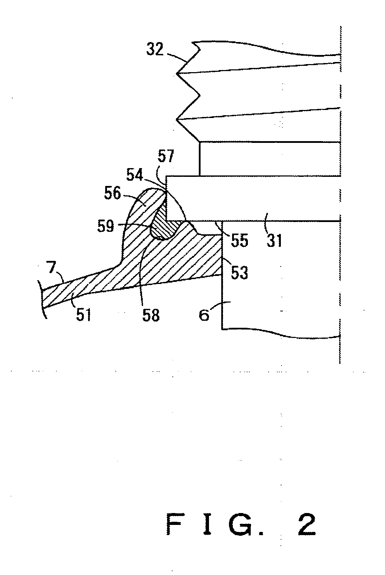

Fig. 1 is a sectional view of a ball joint showing an embodiment of the present invention, and Fig. 2 is a longitudinal sectional view showing a part of the same ball joint as the above in an enlarged manner.

### Best Mode for Carrying out the Invention

Hereinafter, an embodiment of the present invention will be described with reference to the drawings.

In Fig. 1, 1 denotes a ball joint. This ball joint 1 is used in, for example, a suspension device (suspension mechanism), steering device (steering mechanism) or the like of an automobile, etc.

As this ball joint 1, in an inner chamber 2a of an approximately cylindrical housing 2 made of a metal or the like, a ball portion 4 as a ball head portion of a ball stud 3 made of steel or the like is rotatably fitted via a ball seat 5 as a bearing sheet integrally formed of a synthetic resin or a synthetic resin and a cushion material. And, between an outer circumferential surface that is an outside surface of the housing 2 and an outer circumferential surface that is an outside surface of a stud portion 6 as a shaft portion of the ball stud 3, a dust cover 7 is attached. This dust cover 7 is formed of an elastically deformable rubber or a soft synthetic resin, etc., in a pipe form. In addition, the ball sheet 5 is retained inside the housing 2 by a plug 11 made of steel or the like fixed by caulking to a lower portion of the housing 2. Furthermore, the dust cover 7 is fixed by a clip 12 to one end portion in the axial direction of the housing 2.

The housing 2 is provided with a socket 16 as a housing body in which an approximately cylindrically formed seat fitting portion 15 is provided in a penetrating manner. At the other end portion in the axial direction of this socket 16, namely, at a side opposite the dust cover 7, a step-like contact portion 17 as a caulking step portion is provided along an opening rim of the sheet fitting portion 15.

And, to this contact portion 17, an approximately disk-formed plug 11 inserted through the opening of the other end side in the axial direction of the socket 16 is attached, and this plug 11 blocks the opening of the other end side in the axial direction of the sheet fitting portion 15.

Furthermore, at the other end portion in the axial direction of the socket 16, a caulking portion 18 whose diameter has been reduced by a caulking deformation is provided, and by this caulking portion 18, the plug 11 is integrally fixed with the socket 16.

At one end portion in the axial direction of the socket 16, namely, at the dust cover 7 side, formed is a curved surface portion whose inside diameter dimension is gradually reduced toward one end side in the axial direction of this socket 16, and furthermore, at one end side in the axial direction of this curved surface portion 21, an opening portion 22 is provided. At an outer circumferential surface side of the one-end portion in the axial direction of the socket 16, an annular fitting groove portion 23 is provided.

On the ball stud 3, the stud portion 6 is provided in a protruding manner from the ball portion 4. The ball portion 4 is formed to be greater in diameter than the stud portion 6. In addition, on the outer circumferential surface that is an outside surface of the stud portion 6, a disk-formed brim portion 31 is integrally formed. This brim portion 31 is protruded in the diametrical direction of the stud portion 6, and is also provided across the whole in the circumferential direction of the stud portion 6. Furthermore, on the outer circumferential surface of the stud portion 6, a male screw portion 32 is provided from the brim portion 31 , across a tip portion that is opposite to the ball portion 4. This male screw portion 32 is for fixing the ball joint 1 to a to-be-attached portion or the like (unillustrated). Accordingly, an end face of the brim portion 31 opposite to the ball portion 4 serves as a seat surface when the ball joint 1 is attached to the to-be-attached portion.

The ball sheet 5 is, for example, a sheet formed of a hard synthetic resin or the like in an approximately cylindrical shape with a bottom, and this is provided with a body portion 42 having a sliding surface 41 similar in shape to the ball portion 4 and rotatably retains the outer circumferential surface of the ball portion 4 housed in a latched manner inside the sliding surface 41.

In this ball sheet 5, an opening portion 43 communicated with the opening portion 22 of the housing 2 is formed at one end side in the axial direction of the body portion 42, and through this opening portion 43, the ball portion 4 of the ball stud 3 is inserted.

The dust cover 7 is also referred to as a dust seal or boot, etc., and this blocks the opening portion 22 of the housing 2 to prevent water or dust, etc., from intruding inside the opening portion 22. Also, in this dust cover 7, at one end portion in the axial direction of an approximately cylindrical cover body 51, an annular socket-side fitting portion 52 as a large opening portion 52 is formed in a shape of an approximately letter L in a sectional view. And, this socket-side fitting portion 52 is fitted inside the fitting groove portion 23 and is attached by being tightened in the center direction of the socket 16 by the clip 12 annularly formed of a metal or the like.

At the other end portion in the axial direction of this dust cover 7, namely, at a side opposite the socket 16, a stud-side fitting portion 53 as a small opening portion is provided. This stud-side fitting portion 53 is fitted to an outer circumferential surface closer to the ball portion 4 side than the brim portion 31 of the stud portion 6 in a closely fitted condition. As a result, by this dust cover 7, one end side in the axial direction of the opening portion 22 of the socket 16 is covered.

In addition, as shown in Fig. 2, on the outside surface of one end portion in the axial direction of the dust cover 7, a ring-formed first lip portion 54 is provided integrally with the cover body 51 while being positioned at a marginal portion of the stud-side fitting portion 53. This first lip portion 54 is provided in a protruded arc form protruded toward the brim portion 31 side in a sectional view. In addition, this first lip portion 54 is provided at a position slightly apart from the stud portion 6 in the diametrical direction of the dust cover 7.

Herein, the dust cover 7 has been formed so that the dimension in the axial direction of the cover body 51 is slightly greater than the distance dimension between the socket-side fitting portion 52 and ball portion 4-side end face 55 of the brim portion 31. Therefore, the cover body 51 is attached between the outer circumferential surface of the housing 2 and outer circumferential surface of the stud portion 6 in a manner curved in the axial direction. Accordingly, the first lip portion 54 is, by an elastic force whereby the cover body 51 is deformed and restored in a condition where the dust cover 7 is attached across the outer circumferential surface of the housing 2 and outer circumferential surface of the stud portion 6, closely fitted to a part of the ball portion 4-side end face 55 of the brim portion 31 in an anchor ring form while the tip portion is urged toward the ball portion 4-side end face 55 of the brim portion 31, namely, the other end side in the axial direction of the dust cover 7.

And, outside of the first lip portion 54 on the outside surface of one end portion in the axial direction of the dust cover 7, a ring-formed second lip portion 56 is provided integrally with the cover body 51 while being positioned at a marginal portion of the stud-side fitting portion 53. This second lip portion 56 is provided in a manner further protruded outside the dust cover 7 than the first lip portion 54, and is closely fitted to an outer circumferential surface 57 that is an outside surface of the brim portion 31. Here, this second lip portion 56 is shaped in a manner slanted in a center axis direction of the dust cover 7, namely, inside, from its base end portion of the cover body 51 side, namely, from the base toward its tip portion, and is formed so that the opening diameter of the tip portion is smaller than the outside diameter of the brim portion 31. Furthermore, the second lip portion 56 is, by an elastic force whereby the cover body 51 is deformed and restored in a condition where the dust cover 7 is attached across the outer circumferential surface of the housing 2 and outer circumferential surface of the stud portion 6, closely fitted along a part of the outer circumferential surface 57 of the brim portion 31 in an anchor ring form while the tip portion is urged toward the outer circumferential surface 57 of the brim portion 31, namely, the other end side in the center axis direction of the dust cover 7. In other words, the second lip portion 56 retains a repulsive force toward the outer circumferential surface 57 of the brim portion 31 in a condition where the dust cover 7 is attached across the outer circumferential surface of the housing 2 and outer circumferential surface of the stud portion 6.

In addition, the second lip portion 56 is slightly apart from the first lip portion 54 in the diametrical direction of the dust cover 7. Therefore, in the dust cover 7, a concave pocket portion 58 is formed between the first lip portion 54 and second lip portion 56 and the brim portion 31. Inside of this pocket portion 58, a lubricant member 59 such as, for example, grease is filled and retained.

The plug 11 is formed of a metal disk or the like according to a shape of the socket 16, whose marginal portion is fixed by caulking by the caulking portion 18 of the housing 2.

Next, operations of the above-described embodiment will be described.

When the ball stud 3 fixed to a to-be-attached portion is swayed with respect to the housing 2, the cover body 51 of the dust cover 7 is elastically deformed according to the sway of the ball stud 3.

At this time, by a repulsive force whereby the second lip portion 56 goes toward the outer circumferential surface 57 of the brim portion 31 of the ball stud 3, namely, an elastic force and by a tension of the second lip portion 56, the second lip portion 56 follows the brim portion 31 and is closely fitted to the outer circumferential surface 57 of this brim portion 31, and thereby prevents a gap formation between the second lip portion 56 and brim portion 31.

In addition, the first lip portion 54 is closely fitted to the ball portion 4-side end face 55 of the brim portion 31 of the ball stud 3 by an elastic force of the cover body 51, and thereby prevents a gap formation between the first lip portion 54 and brim portion 31.

As described above, in the above-described embodiment, an elastic dust cover 7 is provided between the outside surface of the housing 2 and outer circumferential surface of the stud portion 6 of the ball stud 3 so as to block the opening portion 22 of the housing 2, and in this dust cover 7, provided are the first lip portion 54 closely fitted in a manner urged toward the ball portion 4-side end face 55 of the brim portion 31 and the second lip portion 56 closely fitted in a manner urged toward the outer circumferential surface of the brim portion 31.

As a result, even in such a case where the ball stud 3 is relatively greatly swayed with respect to the housing 2, the first lip portion 54 and second lip portion 56 securely follow the brim portion 31 of the ball stud 3 and are closely fitted, sealing of the ball joint 1 by the dust cover 7 can be made satisfactory.

In addition, the first lip portion 54 is closely fitted, in a manner urged toward the ball portion 4-side end face 55 of the brim portion 31, in an anchor ring form to a part of the end face 55, whereby an urging force to the ball portion 4-side end face 55 of the brim portion 31 is more securely transmitted to the ball portion 4-side end face 55, thus sealing can further be improved.

Furthermore, the second lip portion 56 is closely fitted, in a manner urged toward the outer circumferential surface 57 of the brim portion 31, in an anchor ring form to a part of the outer circumferential surface 57 of this brim portion 31, whereby an urging force to the outer circumferential surface of the brim portion 31 is more securely transmitted to the outer circumferential surface 57 of the brim portion 31. Thus, compared to, for example, a case where the second lip portion is formed in a surface form and is made to contact against the whole outer circumferential surface of the brim portion, sealing can further be improved.

And, by providing, between the first lip portion 54 and second lip portion 56 of the dust cover 7 and brim portion 31 of the ball stud 3, the pocket portion 58 to retain the lubricant member 59 inside, wear resistance of the second lip portion 56 can be improved, and a co-rotation of the ball stud 3 and dust cover 7 can be prevented to secure sealing.

However, in the above-described embodiment, detail other than the dust cover 7 of the ball joint 1 is not limited to that of the above-described construction.

In addition, a construction wherein no lubricant material 59 is retained in the pocket portion 58 is also possible.

### Industrial Applicability

As in the above, a ball joint according to the present invention can be used in, for example, a suspension device (suspension mechanism), steering device (steering mechanism) or the like of an automobile, etc.

## Claims

1. A ball joint comprising: a housing (2) with an opening portion (22); a ball head portion rotatably housed in this housing (2); a ball stud (3) with a stud portion (6) provided in a protruding manner from this ball head portion, protruding from said opening portion (22) and a brim portion (31) provided in a protruding manner on an outside surface of this stud portion (6); and an elastic approximately pipe-formed dust cover (7) inserted through said stud portion (6), provided across an outside surface of said housing (2) and an outside surface of said stud portion (6) so as to block said opening portion (22), wherein
said dust cover (7) is provided with a first lip portion (54) which is closely fitted in a manner urged toward a ball head portion-side end face of said brim portion (31) and second lip portion (56) which is closely fitted in a manner urged toward an outside surface of said brim portion (31), **characterized in that** the dust cover is provided with a pocket portion provided between the first lip portion and second lip portion adjacent the brim portion of the ball stud, whereby the pocket portion can retain a lubricant therein.

2. The ball joint as set forth in claim 1, wherein: the first lip portion (54) is, in a manner urged toward a ball head portion-side end face of the brim portion (31), closely fitted like a surface to a part of this end face.

3. The ball joint as set forth in claim 1 or claim 2, wherein: the second lip portion (56) is, in a manner urged toward an outside surface of the brim portion (31), closely fitted like a surface to a part of this outside surface.

## Patentansprüche

1. Kugelgelenk, das Folgendes umfasst: ein Gehäuse (2) mit einem Öffnungsteil (22); ein Kugelkopfteil, das drehbar in diesem Gehäuse (2) untergebracht ist; einen Kugelzapfen (3) mit einem Bolzenteil (6), von diesem Kugelkopfteil in einer vorstehenden Art und Weise verlaufend, vorstehend von dem Öffnungsteil (22) und einem Randteil (31), in einer vorstehenden Art und Weise an einer Außenfläche dieses Bolzenteils (6) verlaufend; und eine elastische, annähernd röhrenförmige Staubabdeckung (7), eingeführt durch das Bolzenteil (6), über eine Außenfläche des Gehäuses (2) und eine Außenfläche des Bolzenteils (6) verlaufend, sodass sie das Öffnungsteil (22) blockiert, wobei
die Staubabdeckung (7) mit einem ersten Lippenteil (54) versehen ist, das dicht gegen eine auf der Kugelkopfteilseite befindliche Abschlussoberfläche des Randteils (31) gedrückt ist, und ein zweites Lippenteil (56), das dicht gegen eine Außenfläche des Randteils (31) gedrückt ist, **dadurch gekennzeichnet, dass** die Staubabdeckung mit einem zwischen dem ersten Lippenteil und dem zweiten Lippenteil, angrenzend an das Randteil des Kugelzapfens, befindlichen Taschenteil ausgestattet ist, wobei das Taschenteil ein Schmiermittel aufnehmen kann.

2. Kugelgelenk gemäß Anspruch 1, wobei das erste Lippenteil (54) so gegen eine auf der Kugelkopfteilseite befindliche Abschlussoberfläche des Randteils (31) gedrückt ist, dass es dicht wie eine Oberfläche an einem Teil dieser Abschlussoberfläche montiert ist.

3. Kugelgelenk gemäß Anspruch 1 oder 2, wobei das zweite Lippenteil (56) so gegen eine Außenfläche des Randteils (31) gedrückt ist, dass es dicht wie eine Oberfläche an einem Teil dieser Außenfläche montiert ist.

## Revendications

1. Joint à rotule comprenant : un logement (2) avec une partie d'ouverture (22) ; une partie de tête à boule logée en rotation dans ce logement (2) ; une tige à boule (3) avec une partie de tige (6) disposée de manière saillante depuis cette partie de tête à boule, saillant depuis ladite partie d'ouverture (22) et une partie de nervure (31) disposée de manière saillante sur une surface extérieure de cette partie de tige (6) ; et un cache anti-poussière élastique ayant approximativement la forme d'un tube (7) inséré au travers de ladite partie de tige (6), disposé en travers d'une surface extérieure dudit logement (2) et d'une surface extérieure de ladite partie de tige (6) de façon à obstruer ladite partie d'ouverture (22), dans lequel
ledit cache anti-poussière (7) est doté d'une première partie de lèvre (54) qui est étroitement ajustée en étant poussée contre la face d'extrémité côté partie de tête à boule de ladite partie de nervure (31) et une seconde partie de lèvre (56) qui est montée serrée en étant poussée vers une surface extérieure de ladite partie de lèvre (31), **caractérisé en ce que** le cache anti-poussière est doté d'une partie de poche disposée entre la première partie de lèvre et la seconde partie de lèvre adjacente à la partie de nervure de la tige à boule, ce par quoi la partie de poche peut retenir à l'intérieur un lubrifiant.

2. Joint à rotule selon la revendication 1, dans lequel : la première partie de lèvre (54) est, en étant poussée contre une face d'extrémité côté partie de tête à boule de la partie de nervure (31), ajustée étroitement comme une surface sur une partie de cette face d'extrémité.

3. Joint à rotule selon la revendication 1 ou la revendication 2, dans lequel : la seconde partie de lèvre (56) est, en étant poussée contre une surface extérieure de la partie de nervure (31), étroitement ajustée comme une surface sur une partie de cette surface extérieure.
